**Europäisches Patentamt**

**European Patent Office**

**Office européen des brevets**

(11) Veröffentlichungsnummer: **0 352 335**
**A1**

## EUROPÄISCHE PATENTANMELDUNG
### veröffentlicht nach Art. 158 Abs. 3 EPÜ

(21) Anmeldenummer: 89900945.0

(22) Anmeldetag: 29.09.88

(86) Internationale Anmeldenummer: PCT/SU88/00195

(87) Internationale Veröffentlichungsnummer: WO 89/05705 (29.06.89 89/14)

(51) Int. Cl.4: **B23F 19/00 , B23F 21/28**

(30) Priorität: 24.12.87 SU 4342345

(43) Veröffentlichungstag der Anmeldung: **31.01.90 Patentblatt 90/05**

(84) Benannte Vertragsstaaten: **CH DE FR GB IT LI SE**

(71) Anmelder: **SARATOVSKOE SPETSIALNOE KONSTRUKTORSKOE BJURO ZUBOOBRABATYVAJUSCHIKH STANKOV SARATOVSKOGO STANKOSTROITELNOGO PROIZVODSTVENNOGO OBIEDINENIA ul. Ogorodnaya, 162 Saratov 410036(SU)**

(72) Erfinder: **ABYSOV, Nikolai Anatolievich ul. Millerovskaya, 18-71 Saratov; 410036(SU)**
Erfinder: **BEZGODOV, Valery Alexandrovich ul. Rabochaya, 53-7 Saratov, 410600(SU)**
Erfinder: **BELGORODSKY, Vladimir Semenovich ul. 7 Nagornaya, 12-73 Saratov, 410001(SU)**
Erfinder: **PLOTNIKOV, Nikolai Dmitrievich ul. Antonova-Saratovskogo, 18/40-263 Saratov, 410030(SU)**

(74) Vertreter: **Nix, Frank Arnold, Dr. Kröckelbergstrasse 15 D-6200 Wiesbaden(DE)**

(54) **VERFAHREN ZUR BESTIMMUNG DER LÄNGS- UND PROFIL ÄNDERUNGEN BEI EINER WERKZEUGZAHNOBERFLÄCHE.**

(57) Das Verfahren zur Bestimmung der Längs- und der Profilmodifikation der Oberfläche des Zahns (I) eines Werkzeuges, das mit dem zu bearbeitenden Zahnrad linear gekoppelt ist, besteht in der Ermittlung der Kennwerte der Modifikation nach der Beziehung:

$$\delta = \frac{\Delta pr}{G}$$

wo ∂ - den Wert der Modifikation der Oberfläche des Werkzeugzahns (I) in der zum Radius r der Lage des Berührungspunktes auf der bearbeitenden (5) Oberfläche senkrechten Richtung vom Drehpunkt (O) des Werkzeuges her,

$\Delta p$ - den erforderlichen Zuwachs der Normalkomponente der Schnittkraft,

G - die auf die Werkzeugachse bezogene Steifigkeit des Systems, welches synchrones Drehen des Werkstücks und des Werkzeuges sicherstellt, bedeutet.

FIG.1

- 1 -

## VERFAHREN ZUR BESTIMMUNG DER LÄNGS- UND PROFILMODIFIKATION DER OBERFLÄCHE DES ZAHNS EINES WERKZEUGES

### Technisches Gebiet

Die Erfindung bezieht sich auf den Maschinenbau, nämlich auf das Gebiet der Zahnradherstellung und betrifft insbesondere die Bestimmung der Längs- und Profilmodifikation der Oberfläche des Zahns eines Werkzeuges. Sie eignet sich für den Einsatz bei verschiedenen Arten der Schlichtbearbeitung wie Honen, Schaben, Läppen, Polieren u.a.

### Zugrundeliegender Stand der Technik

Es ist ein Werkzeug in Form eines Zahnrades bekannt (US, 2256586), das gegenüber dem zu bearbeitenden Zahnrad hypoid angestellt und bei der Fertigbearbeitung verwendet wird. Das Verfahren zur Bestimmung der Modifikation des Zahns besteht darin, dass der Profilwinkel, der Neigungswinkel des Zahns und die Teillinie des Zahns auf jeweilige Kennwerte der Zahnoberfläche des zu bearbeitenden Rades abgestimmt sind. Dies ermöglicht zwar, dass die relativen Gleitgeschwindigkeiten der zu bearbeitenden und der bearbeitenden Oberfläche, die Normalkomponente der Schnittkraft, die reduzierten Krümmungen der Oberflächen der in Eingriff befindlichen Werkzeug- und Werkstückzähne usw. bei der Fertigbearbeitung mit einem solchen Werkzeug nur längs der Teillinie des Zahns festgelegt werden können. Jedoch in übrigen Punkten der Zahnoberflächen lassen sich diese Kennwerte durch nichts festlegen. Dies führt zu unberechenbaren Abweichungen der Oberflächengeometrie der Werkstückzähne von der vorgegebenen während der Fertigbearbeitung.

Es ist ein weiteres Verfahren zur Bestimmung der Zahnmodifikation bekannt (SU, A, I99643), nach dem die Zahnoberfläche die Einhüllende für die Zahnoberfläche des zu bearbeitenden Rades ist. Der Kontakt im Zahneingriff des zu bearbeitenden Rades mit dem Werkzeugrad ist dabei linear. Bei der Bearbeitung dreht man

- 2 -

das Werkzeugrad und das zu bearbeitende Rad mit gleichbleibenden Winkelgeschwindigkeiten (Synchrondrehen).

Auch bei diesem Verfahren wird die erforderliche Bearbeitungsgenauigkeit nicht gewährleistet. Beim Honen, Läppen, Polieren und anderen Arten der abrasiven Fertigbearbeitung ist der Prozess des Metallabtragens in jeder zu bearbeitenden Oberfläche analog der abrasiven Abnutzung. Der Wert des linearen Verschleisses ergibt sich im allgemeinen Fall aus der Beziehung (N.N.Khruschov u.a. "Abrasiver Verschleiss", Verlag "Nauka", M., 1970, S. 96):

$$\Delta l = cp \Delta S \qquad (I)$$

wo : $\Delta l$ den linearen Verschleiss des Werkstücks,

c einen für das reibende Paar konstanten Proportionalitätsfaktor,

p die Normalkonstante der Schnittkraft,

$\Delta S$ den Reibungsweg bedeuten.

Für den Fall des Honens von Kegelzahnrädern mit dem Werkzeug in Form eines Zahnrades ist der Reibungsweg $\Delta S$ direkt proportional der relativen Gleitgeschwindigkeit $V_s$ der zu bearbeitenden und der bearbeitenden Oberfläche und umgekehrt proportional der Bewegungsgeschwindigkeit $V_r$ des Berührungspunktes auf der zu bearbeitenden Oberfläche. Dann gilt

$$\Delta l = cp \frac{V_s}{V_r} \qquad (2)$$

Aber $V_s$ und $V_r$ sind verschieden in verschiedenen Punkten der Zahnoberfläche, deswegen wird auch der Wert $\Delta l$ inkonstant sein, d.h. das Metallabtragen auf verschiedenen Abschnitten des Werkstückszahns und der Verschleiss der Oberfläche des Werkzeugzahns wird ungleichmässig sein, was die Genauigkeit der Bearbeitung und die Standzeit des Werkzeuges senkt.

Dem zum Patent angemeldeten kommt ein Verfahren zur Bestimmung der Längs- und Profilmodifikation der Oberfläche des Zahns eines mit dem zu bearbeitenden Rad linear gekoppelten Werkzeuges am nächsten

- 3 -

(I.I.Semenchenko u.a. "Projektieren von spanenden Werkzeugmaschinen", Verlag Mashgiz, 1963, S. 792 bis 794), bei dem zum Erhalten der richtigen Form des Radzahnes das Profil des Werkzeugzahns auf entsprechende Weise korrigiert, d.h. einer Modifikation ausgesetzt wird. Die Modifikation des Profils des Werkzeugzahns wird bei dessen Anfertigung gemäss den sich bei der Fertigbearbeitung ergebenden Abweichungen der Radzähne durchgeführt. Das erforderliche Profil des Werkzeugzahns wird auf experimentellem Wege aufgrund der Prüfungen und Vermessungen der bearbeiteten Zahnräder bestimmt. Dieses Verfahren setzt voraus, dass eine gewisse Menge an Versuchslosen der Zahnräder und Werkzeuge hergestellt wird und die Oberfläche des Werkzeugzahns periodisch nach erfolgter Fertigbearbeitung modifiziert wird. In Anbetracht dessen, dass der Charakter der Modifikation für jeden Typ des Rades verschieden ist, wird dieses teure Verfahren nur bei Massen- und Grossserienherstellung der Zahnräder angewendet.

Offenbarung der Erfindung

Der Erfindung liegt die Aufgabe zugrunde, ein solches Verfahren zur Bestimmung der Längs- und Profilmodifikation der Oberfläche des Zahns eines Werkzeuges zu schaffen, bei dem aufgrund der Ermittlung geometrischer Kennwerte der bearbeitenden Oberfläche des Werkzeugzahns je nach technischen Charakteristiken der Werkzeugmaschine die Genauigkeit der Bearbeitung der Zahnräder mit diesem Werkzeug sowie dessen Standzeit erheblich gesteigert werden kann.

Diese Aufgabe wird dadurch gelöst, dass man beim Verfahren zur Bestimmung der Längs- und Profilmodifikation der Oberfläche des Zahns eines mit dem zu bearbeitenden Zahnrad linear gekoppelten Werkzeuges erfindungsgemäss im System, welches synchrones Drehen des Werkstücks und des Werkzeuges sicherstellt, die Kennwerte der Längs- und Profilmodifikation der bearbeitenden Oberfläche des Werkzeugzahns im mehreren hinsichtlich der Längs- und der Profilachse symmet-

- 4 -

risch gelegenen Berührungspunkten auf dieser Oberfläche nach folgender Beziehung ermittelt:

$$\delta = \frac{\Delta p r}{G}$$

wo $\delta$ den Wert der Modifikation der Oberfläche des
Werkzeugzahns in der zum Radius r der Lage des
Berührungspunktes auf der bearbeitenden Oberfläche
senkrechten Richtung vom Drehpunkt des Werkzeuges her,

$\Delta p$ den erforderlichen Zuwachs der Normalkomponente der Schnittkraft,

G die auf die Werkzeugachse bezogene Steifigkeit
des Systems, welches synchrones Drehen des Werkstücks
und des Werkzeuges sicherstellt, bedeutet, während
man $\Delta p$ aus der Formel:

$$\Delta p = \frac{p \, \Delta \dfrac{V_s}{V_r}}{\dfrac{V_s}{V_r} + \Delta \dfrac{V_s}{V_r}}$$

ermittelt, wo

p die Normalkomponente der Schnittkraft,

$V_s$ die relative Gleitgeschwindigkeit der zu bearbeitenden und der bearbeitenden Oberfläche,

$V_r$ die Bewegungsgeschwindigkeit des Berührungspunktes auf der zu bearbeitenden Oberfläche bedeutet.

Dadurch wird die Möglichkeit gegeben, die Genauigkeit der Bearbeitung der Zahnräder mit diesem Werkzeug
und dessen Standzeit erheblich zu steigern.

Es ist zweckmässig, die Anzahl der Berührungspunkte zur Bestimmung der Modifikation der bearbeitenden Oberfläche gleich 5 bis 9 zu wählen, vorausgesetzt, dass sie mehr als die Hälfte der Oberfläche
des Werkzeugzahns einnehmen.

Dies ermöglicht es, die bearbeitende Oberfläche
des Werkzeugzahns mit maximaler Genauigkeit unter Berücksichtigung der Besonderheiten der zu bearbeitenden Oberfläche der Werkstückzähne zu modifizieren.

- 5 -

Kurze Beschreibung der Zeichnungen

Im folgenden wird die Erfindung an Hand konkreter Ausführungsbeispiele und der beiliegenden Zeichnungen näher erläutert. In den Zeichnungen zeigt:

Fig. I in schematischer Darstellung die Anordnung der kämmenden Zähne des Werkstücks und des Werkzeuges im Normalschnitt, gemäss der Erfindung;

Fig. 2 die Verteilung der Berührungspunkte auf der Oberfläche des Werkzeugzahns, in denen man die Längs- und Profilmodifikation bestimmt, gemäss der Erfindung;

Fig. 3 in der Gesamtansicht das Blockschema des Systems der Werkzeugmaschine, auf der das erfindungsgemässe Verfahren durchgeführt wird.

Ausübung der Erfindung

Das erfindungsgemässe Verfahren zur Bestimmung der Längs- und Profilmodifikation der Oberfläche des Zahnes eines Schleifwerkzeuges besteht in folgendem.

Zunächst bestimmt man geometrische Kennwerte eines Schleif- oder irgendeines anderen Zahnwerkzeuges, das mit dem zu bearbeitenden Rad linear gekoppelt ist und beispielsweise ihm gegenüber hypoid angeordnet ist. Man analysiert die Eingriffsgüte zwischen dem Werkzeugzahn I (Fig. I) und dem Werkstückzahn 2, d.h. die reduzierten Spalte, die relativen Gleitgeschwindigkeiten der zu bearbeitenden 3 und der bearbeitenden Oberfläche 4, die Breite und die Form der Kronenfase des Werkzeugzahns, den Wert der Unterschneidung des Werkzeugzahns I in der Werkzeugmaschinenverzahnung, die Lage der Grenze der aktiven Zone auf dem Werkzeugzahn I im Eingriff mit dem Werkstückzahn 2 usw., dabei wird darauf geachtet, dass diese Kennwerte nicht über die vorgegebenen Grenzen hinausgehen. Daraufhin baut man die Oberfläche 4 des Werkzeugzahns I auf, wozu man die Oberfläche 5, die für die Oberfläche 3 des Werkstückzahns 2 die Einhüllende ist, unter der Berücksichtigung findet, dass das Werkzeug und das Werkstück sich synchron drehen, d.h.mit gleich-

- 6 -

bleibenden Geschwindigkeiten, deren Verhältnis gleich dem Verhältnis der Zahl der Werkstückzähne 2 zur Zahl der Werkzeugzähne I ist.

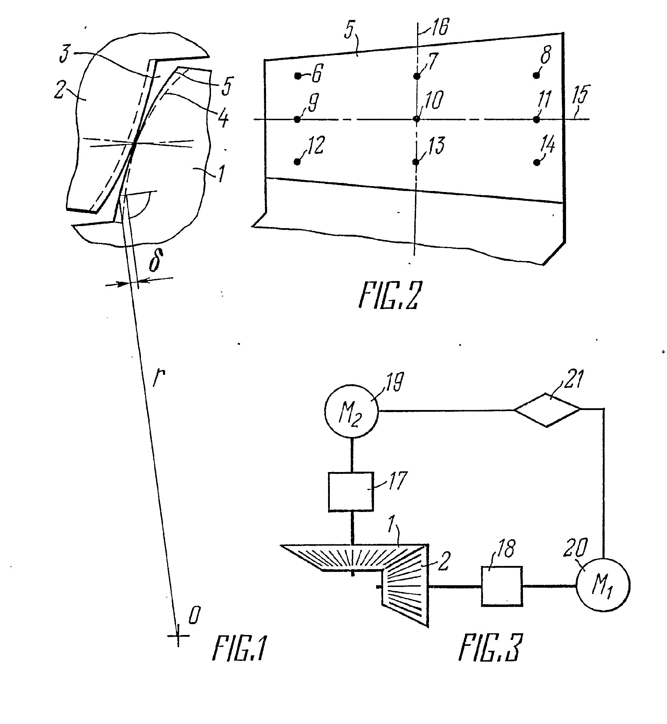

Es sei bemerkt, dass zur Vollständigkeit der Information über den Schnittvorgang, der im Eingriff der Werkstückzähne 2 und der Werkzeugzähne I abläuft, es notwendig ist, die relativen Gleitgeschwindigkeiten $V_s$ der zu bearbeitenden und der bearbeitenden Oberfläche 3 bzw. 5 sowie die Bewegungsgeschwindigkeit $V_r$ der Berührungspunkte 6 bis I4 (Fig. 2) der Oberfläche 5 des Werkzeugzahns I auf der Oberfläche 3 (Fig. I) des Werkstückzahns 2 zu bestimmen.

Die Berührungspunkte 6 bis I4 (Fig. 2) liegen symmetrisch bezüglich der Längs- und der Profilachse I5 bzw. I6 der Oberfläche 5 des Werkzeugzahns I und nehmen zumindest die Hälfte der Oberfläche 5 des Zahns I ein. In Fig. 2 ist das Beispiel für die Anordnung von neun Berührungspunkten gegeben. Die maximale Anzahl der Berührungspunkte, in denen die Modifikation der Oberfläche 5 des Werkzeugzahns I bestimmt wird, kann für manche Eingriffsarten fünf sein. In diesem Fall muss ein Berührungspunkt unbedingt in der Mitte der Oberfläche 5 des Zahns I im Schnittpunkt der Achsen I5 und I6 der Längs- bzw. der Profilmodifikation angeordnet werden, während die übrigen vier Punkte an den Winkeln der Oberfläche 5 des Zahnes I so angeordnet werden, dass die gesamten Berührungspunkte einen sogenannten "Umschlag" bilden, dessen äussere Kontur zumindest die Hälfte der Oberfläche 5 des Zahns I erfassen sollte.

Aber die Intensität des Metallabtrags bei der Schleifbearbeitung mit dem Werkzeug in Form eines Zahnrades mit modifizierter Zahnoberfläche hängt in wesentlichem Maße von der Steifigkeit G des Systems der Werkzeugmaschine (Fig. 3), ab, auf der die Fertigbearbeitung durchgeführt wird. Im allgemeinen umfasst die Werkzeugmaschine, auf der beispielsweise Kegelräder gehont werden, Abschnitte kinematischer Ketten I7

und 18 des Werkzeugs bzw. des Werkstücks, Elektromotore 19 und 20, die als Antriebe dieser Abschnitte kinematischer Ketten 17

- 7 -

und 18 dienen, und ein System 21 der synchronen Bindung der Elektromotoren 19 und 20. Die Steifigkeit G der Werkzeugmaschine reduziert man auf das Werkzeug. Die erforderliche Modifikation der Oberfläche 5 (Fig. 1, 2) des Werkzeugzahnes 1 in den Berührungspunkten 6 bis 14 ergibt sich aus der Formel:

$$\delta = \frac{\Delta \mathrm{pr}}{G} \qquad (3)$$

wo: $\delta$ - den Wert der Modifikation der Oberfläche des Werkzeugzahns in der zum Radius r der Lage des Berührungspunktes auf der bearbeitenden Oberfläche senkrechten Richtung,

$\Delta p$ - den erforderlichen Zuwachs der Normalkomponente der Schnittkraft,

r - den Radius der Lage des Berührungspunktes auf der bearbeitenden Oberfläche vom Drehpunkt o des Werkzeuges her und

G - die auf die Werkzeugachse bezogene Steifigkeit des Systems, die synchrones Drehen des Werkstücks und des Werkzeuges sicherstellt, bedeutet.

Der Wert $\Delta p$ des erforderlichen Zuwachses der Normalkomponente der Schnittkraft wird eingeführt, damit die Konstanz des linearen Verschleisses $\Delta l$, d.h. ein gleichmässiges Abtragen des Metalls auf der gesamten Oberfläche 3 des Werkstückzahns, gewährleistet ist. Zur Ermittlung des Wertes $\Delta p$ muss man die Abweichung $\Delta \frac{V_s}{V_r}$ vom durchschnittlichen Wert des Verhältnisses $\frac{V_s}{V_r}$ in denjenigen Punkten des Werkstückzahns 2 errechnen, welche von den Berührungspunkten 6 bis 14 der Oberfläche 5 des Werkzeugzahns 1 bearbeitet werden. Dann nimmt der Ausdruck (2) die Gestalt an:

$$\Delta l = c(p + \Delta p)\left(\frac{V_s}{V_r} + \Delta \frac{V_s}{V_r}\right) \qquad (4)$$

Aus den Ausdrücken (2) und (4) ist leicht der Wert des Zuwachses der Normalkomponente der Schnittkraft $\Delta p$

- 8 -

zum Ausgleich der Abweichung $\Delta \dfrac{V_s}{V_r}$ vom durchschnittlichen Wert zu bestimmen:

$$\Delta p = - \frac{p \Delta \dfrac{V_s}{V_r}}{\dfrac{V_s}{V_r} + \Delta \dfrac{V_s}{V_r}} \tag{5}$$

Man ändert die Normalkomponente der Schnittkraft durch die Modifikation der Oberfläche des Werkzeugzahns. Die Abschnitte in der Umgebung der Berührungspunkte 6 bis I4, wo das Spanen intensiver geschieht, werden "in den Körper" des Werkzeugzahns I abgeführt und umgekehrt, und somit wird eine modifizierte Arbeitsoberfläche 4 hergestellt.

Gewerbliche Verwertbarkeit

Die Fertigbearbeitung von Kegelrädern mit einem nach dem erfindungsgemässen Verfahren projektierten und angefertigten Werkzeug in Form eines abrasiven Zahnrades gewährleistet die Erhaltung einer erforderlichen Eingriffsgüte des Zahnradpaares ohne Verzug der bearbeiteten Zahnoberflächen, was besonders wichtig im Präzisionsmaschinenbau ist. Beispielsweise beim Zahnhonen, das in der Flugzeugindustrie nach dem Zahnschleifen vorgenommen wird, liegt eine der Ursachen des Ausschusses in der Zahnprofilverzerrung infolge des ungleichmässigen Metallabtrags am äusseren und am inneren Kegel. Die Verwendung des Werkzeuges, dessen Arbeitsfläche nach dem erfindungsgemässen Verfahren modifiziert ist, ermöglicht das Abträgen der ganzen defekten Metallschicht, die unvermeidlich nach dem Zahnhonen zurückbleibt, von der Oberfläche des Werkstückzahns, ohne dass die geringsten Anzeichen der Verzerrung der geometrischen Parameter des Werkstückzahns auftreten.

Ein unschätzbarer Vorteil des erfindungsgemässen Verfahrens ist, dass das Werkzeug mit modifizierter Oberfläche der Zähne für die Fertigbearbeitung analytisch zu erhalten ist, ohne dass man zu arbeitsintensiven probeweisen Fertigbearbeitungen von experimentellen Zahnradlosen greifen muss, woraus sich die
Möglichkeit ergibt, dieses Verfahren nicht nur in der
Massen- und Grossserienfertigung, sondern auch in der
Kleinserien- und sogar in der Einzelfertigung einzusetzen. Dieser Vorteil ist besonders wichtig bei der
Benutzung des Werkzeuges mit einer Stahlnabe und einer
Diamantschneidschicht am Zahn aufgrund seines hohen
Wertes.

Für den Verbraucher, der Kegelräder herstellt,
ist das erfindungsgemässe Verfahren zur Modifikation
der Oberfläche des Werkzeugzahns deswegen wirtschaftlich und zweckmässig, weil es sich auf Werkzeugmaschinen mit verschiedenem Grad der kinematischen Wechselwirkung zwischen den Spindeln des Werkstücks und des
Werkzeuges, d.h. mit verschiedener Steifigkeit der
Werkzeugmaschine, durchführen lässt. Aus dem Ausdruck
(3) ist ersichtlich, dass der Wert der Modifikation $\delta$
der Oberfläche des Werkzeugzahns umgekehrt proportional zur Steifigkeit G der Werkzeugmaschine ist, auf der
die betreffende Art der Fertigbearbeitung durchgeführt
wird. Mit anderen Worten, je grössere Steifigkeit die
Werkzeugmaschine besitzt, desto geringere Forderungen
werden an die Modifikation der Oberfläche des Werkzeugzahns gestellt. Das erfindungsgemässe Verfahren gibt
also dem Verbraucher die Möglichkeit, eine hohe Genauigkeit des Werkstücks bei geringsten Kosten zu erhalten.

Das erfindungsgemässe Verfahren zur Bestimmung
der Längs- und Profilmodifikation der Oberfläche des
Werkzeugzahns kann auch bei anderen Fertigbearbeitungsarten wie Läppen, Schaben, Polieren usw. weitgehend
zur Anwendung kommen.

- IO -

## PATENTANSPRÜCHE

I. Verfahren zur Bestimmung der Längs- und Profilmodifikation der Oberfläche des Zahns (I) eines mit dem zu bearbeitenden Zahnrad linear gekoppelten Werkzeuges, dadurch g e k e n n z e i c h n e t, dass man im System, welches synchrones Drehen des Werkstücks und des Werkzeuges sicherstellt, die Kennwerte der Längs- und der Profilmodifikation der bearbeitenden Oberfläche (5) des Werkzeugzahns (I) in mehreren hinsichtlich der Längs- und der Profilachse (I5 bzw. I6) symmetrisch gelegenen Berührungspunkten (6 bis I4) auf dieser Oberfläche nach folgender Beziehung ermittelt:

$$\delta = \frac{\Delta\,\text{pr}}{G}$$

wo $\delta$ - den Wert der Modifikation der Oberfläche des Werkzeugzahns (I) in der zum Radius r der Lage des Berührungspunktes auf der bearbeitenden Oberfläche senkrechten Richtung vom Drehpunkt (O) des Werkzeuges her;

$\Delta\,p$ - den erforderlichen Zuwachs der Normalkomponente der Schnittkraft;

G - die auf die Werkzeugachse bezogene Steifigkeit des Systems, welches synchrones Drehen des Werkstücks und des Werkzeuges sicherstellt, bedeutet, während man $\Delta\,p$ aus der Formel:

$$\Delta\,p = -\frac{p\,\Delta\,\dfrac{V_s}{V_r}}{\dfrac{V_s}{V_r} + \Delta\,\dfrac{V_s}{V_r}}$$

ermittelt, wo:

p - die Normalkomponente der Schnittkraft,

$V_s$ - die relative Gleitgeschwindigkeit der zu bearbeitenden (3) und der bearbeitenden Oberfläche (5),

$V_r$ - die Bewegungsgeschwindigkeit des Berührungspunktes auf der zu bearbeitenden Oberfläche (3) bedeutet.

- II -

2. Verfahren nach Anspruch I, dadurch g e k e n n - z e i c h n e t, dass man die Anzahl der Punkte zur Bestimmung der Modifikation gleich 5 bis 9 wählt, mit der Bedingung, dass sie mehr als die Hälfte der Oberfläche des Werkzeugzahns (I) einnehmen.

FIG.2

FIG.1

FIG.3

# INTERNATIONAL SEARCH REPORT

International Application No PCT/SU 88/00195

## I. CLASSIFICATION OF SUBJECT MATTER (if several classification symbols apply, indicate all) 6

According to International Patent Classification (IPC) or to both National Classification and IPC

IPC$^4$     B 23 F 19/00, 21/28

## II. FIELDS SEARCHED

### Minimum Documentation Searched 7

| Classification System | Classification Symbols |
|---|---|
| IPC$^4$ | B 23 F 19/00, 19/06, 21/00, 21/10, 21/28 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | CH, A5, 564999 (ERWIN J. GÜNTER), 15 August 1975 (15.08.75) see figures 1-2 | 1 |
| A | US, A, 3487516 (LEAR SIEGLER, INC.), 6 January 1970 (06.01.70) see figures 4,5 | 1 |
| A | M.M. Palei "Tekhnologia proizvodstva metallorezhuzhuschikh instrumentov", 1982, Mashinostroenie, (Moscow), see pages 179-180 | 1 |
| A | P.R. Rodin "Metallorezhuschie instrumenty", 1986, Vischa shkola (Kiev), see page 364 | 1 |
| A | EP, A3, 0037909 (CLARENBACH, JOHANNES), 26 May 1982 (26.05.82) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 February 1989 (24.02.89) | 3 April 1989 (03.04.89) |

| International Searching Authority | Signature of Authorized Officer |
|---|---|
| ISA/SU | |

Form PCT/ISA/210 (second sheet) (January 1985)